# EUROPÄISCHE PATENTSCHRIFT

(11) **EP 2 867 526 B1**
(45) Veröffentlichungstag und Bekanntmachung des Hinweises auf die Patenterteilung: **21.03.2018**
(21) Anmeldenummer: 13733963.6
(22) Anmeldetag: 12.06.2013
(51) Int. Cl.: F03D 80/80, F03D 80/50, H02G 3/06, H02G 5/06

(54) **VERFAHREN ZUM REPARIEREN EINES STROMSCHIENENGEHÄUSES EINER WINDKRAFTANLAGE**
METHOD FOR REPAIRING A POWER RAIL HOUSING OF A WIND POWER PLANT
PROCÉDÉ DE RÉPARATION D'UN CAISSON DE BARRES COLLECTRICES D'UNE ÉOLIENNE

(30) Priorität: 28.06.2012 DE 102012105669
(43) Veröffentlichungstag der Anmeldung: 06.05.2015
(73) Patentinhaber: FLYTEG GmbH & Co. KG, 22457 Hamburg (DE)
(72) Erfinder: WIECHERS, Jörg, 25485 Bilsen (DE)
(74) Vertreter: Patentanwälte Behrmann Wagner PartG mbB
(86) Internationale Anmeldenummer: PCT/EP2013/062131
(87) Internationale Veröffentlichungsnummer: WO 2014/001085

(56) Entgegenhaltungen:
- EP-A2- 2 143 937
- EP-A2- 2 169 223
- DE-U1- 7 918 984
- GB-A- 2 482 923
- US-A- 2 353 121

## Beschreibung

### Stand der Technik

Die Erfindung betrifft ein Verfahren zum Reparieren eines Stromschienengehäuses einer Windkraftanlage.

Innerhalb eines Turms einer Windkraftanlage sind die zur Führung des Stromes vorgesehenen, insbesondere aus Aluminium bestehenden Stromschienen innerhalb eines mehrteiligen Stromschienengehäuses angeordnet. Durch das Stromschienengehäuse werden insbesondere ein direkter Zugang bzw. eine direkte Berührung sowie das Entstehen von Kurzschlüssen der stromführenden Stromschienen vermieden. Ein derartiges Stromschienengehäuse besteht in der Praxis aus einer Vielzahl von miteinander verbundenen Stromschienengehäuseabschnitten, die an den einander zugewandten Seiten mit Verbindungselementen miteinander verbunden sind. Diese Verbindungselemente sind insbesondere in Form von Abdeckblechen oder Lochblechen ausgebildet, die gleichzeitig den Verbindungsbereich zwischen den Stromschienen abdecken. Hierbei sind die Verbindungselemente auf einander gegenüberliegenden Seiten des einen im Wesentlichen rechteckförmigen Querschnitt aufweisenden Stromschienengehäuses angeordnet. Ein hinteres Verbindungselement bzw. Abdeckblech befindet sich auf der der Turminnenwand zugewandten Seite, während ein vorderes Abdeckblech dem Innenraum des Turmes zugewandt ist. Nach der Abnahme beispielsweise des vorderen Verbindungselements (Abdeckblech) kann der Verbindungsbereich zwischen den Stromschienen inspiziert bzw. gewartet werden.

Bereits während der Montage der einzelnen Stromschienengehäuseabschnitte, oder aber im Rahmen von Wartungsarbeiten oder ähnlichem kann es infolge von Montagefehlern bzw. Ungenauigkeiten bei der Montage dazu kommen, dass beispielsweise eine der Verbindung des Abdeckblechs an dem Stromschienengehäuseabschnitt dienende Schraube in einem Gewindebereich abreißt, oder aber das in dem Stromschienengehäuseabschnitt vorgesehene, vorab eingebrachte Gewinde zur Verankerung der Schraube beschädigt wird. Dadurch ist eine Wiedermontage des Verbindungselements bzw. des Abdeckblechs zunächst unmöglich. In der Praxis wird daher aus Vereinfachungsgründen bzw. aufgrund fehlender Alternativen der entsprechende Stromschienengehäuseabschnitt mit dem fehlerhaften bzw. beschädigten Gewinde bzw. mit der abgerissenen, in dem Gewinde befindlichen Schraube entsorgt, und durch einen neuen Stromschienengehäuseabschnitt ersetzt. Ein derartiges Vorgehen macht es erforderlich, dass, sollen keine Verzögerungen bei der Montage bzw. der Wartung oder Reparatur auftreten, entsprechende Stromschienengehäuseabschnitte an der Windkraftanlage als Ersatzteile bereitliegen. Darüber hinaus ist ein derartiger Austausch alleine schon aus den Investitionsgründen für den zu ersetzenden Stromschienengehäuseabschnitt relativ teuer.

Aus dem US 2,353,121 ist ein Verfahren zur Montage eines Stromschienengehäuses bekannt, bei dem zwei Stromschienengehäuseabschnitte mittels eines Verbindungselements miteinander verbunden werden. Das Verbindungselement weist hierzu Gewinde auf, in die Befestigungsschrauben eingedreht sind. Die Gewindeabschnitte der Befestigungsschrauben wirken mit an dem Stromschienengehäuseabschnitt ausgebildeten, unterschiedlich geformten Durchgangsöffnungen zusammen. Dadurch ist es möglich, nach Ausrichten eines Stromschienengehäuseabschnitts zu dem Verbindungselement, das seinerseits bereits an einem anderen Stromschienengehäuseabschnitt befestigt ist, durch Relativbewegen des Stromschienengehäuseabschnitts zu den Befestigungsschrauben den Stromschienengehäuseabschnitt mit dem Verbindungselement zu verbinden.

### Offenbarung der Erfindung

In Kenntnis des oben dargestellten Stands der Technik liegt der Erfindung die Aufgabe zugrunde, ein wirtschaftlich vorteilhaftes Verfahren zum Reparieren eines Stromschienengehäuses einer Windkraftanlage bereitzustellen. Diese Aufgabe wird erfindungsgemäß bei einem Verfahren zum Reparieren eines Stromschienengehäuses einer Windkraftanlage mit den Merkmalen des Anspruchs 1 gelöst. Hierbei ist es erfindungsgemäß vorgesehen, dass beim Vorhandensein eines beschädigten bzw. nicht verwendbaren Gewindes in einem Stromschienengehäuseabschnitt in einem ersten Schritt der Bereich des Gewindes im Durchmesser vergrößert wird, dass in einem zweiten Schritt in Überdeckung mit dem Gewinde ein ein Ersatzgewinde für die Schraube aufweisendes Trägerelement mit dem das beschädigte Gewinde aufweisenden Stromschienengehäuseabschnitt verbunden wird, und dass in einem dritten Schritt zur Montage des Verbindungselements die Schraube durch den im Durchmesser vergrößerten Bereich des Stromschienengehäuseabschnitts hindurchgeführt und in das Ersatzgewinde eingeschraubt wird, wobei das Trägerelement mittels einer Kleberschicht mit dem Stromschienengehäuseabschnitt verbunden wird, wobei das Trägerelement mit einer zusätzlichen Schraube mit der Wand des Stromschienengehäuseabschnitts verbunden wird, und wobei in der Wand des Stromschienengehäuseabschnitts ein zusätzliches Durchgangsloch und in dem Trägerelement ein zusätzliches Gewinde ausgebildet wird.

Mit anderen Worten gesagt bedeutet dies, dass durch das Trägerelement, das ein separates, zusätzliches Teil darstellt, eine neue Verankerungsmöglichkeit für die Schraube vorgesehen ist, wobei durch das Vergrößern bzw. Aufbohren des ursprünglichen Gewindebereichs im Stromschienengehäuseabschnitt sichergestellt ist, dass die Schraube durch den ursprünglichen Bereich des Stromschienengehäuseabschnitts bzw. des Gewindes hindurchgeführt werden kann und in Wirkverbindung mit dem in dem Trägerelement ausgebildeten Ersatzgewinde gebracht werden kann. Ein derartiges, erfindungsgemäßes Reparaturverfahren ermöglicht es, den ursprünglichen Stromschienengehäuseabschnitt weiterhin verwenden zu können, so dass dieser nicht entsorgt werden muss. Es ist somit, im Gegensatz zum Stand der Technik, auch nicht erforderlich, beispielsweise Stromschienengehäuseabschnitte als Ersatz für nicht mehr verwendbare Stromschienengehäuseabschnitte an der Windkraftanlage bereitzustellen. Durch die Verwendung der Kleberschicht wird es ermöglicht, dass zur Montage der (neuen) Schraube das Trägerelement an der vorgesehenen Stelle innerhalb des Stromschienengehäuseabschnitts vorpositioniert bzw. fixiert ist. Weiterhin wird es durch die gleichzeitige Verwendung der zusätzlichen Schraube ermöglicht, das Trägerelement innerhalb des Stromschienengehäuseabschnitts zusätzlich mechanisch zu fixieren und zu positionieren, so dass dieses während der Montage des Verbindungselements bzw. der Schraube an dem dafür vorgesehenen Ort innerhalb des im Durchmesser vergrößerten Loches des ursprünglichen Gewinde positioniert ist.

Vorteilhafte Weiterbildungen des erfindungsgemäßen Verfahrens zum Reparieren eines Stromschienengehäuses einer Windkraftanlage sind in den Unteransprüchen aufgeführt.

Insbesondere dann, wenn zusätzliche Bauteile zur Positionierung des Trägerelements aus konstruktiven Gründen nicht erwünscht sind bzw. bei der Montage der Verbindungselemente stören, ist es darüber hinaus in einer weiteren Ausgestaltung der Erfindung vorgesehen, dass bei Verwendung einer Kleberschicht die zusätzliche Schraube vor Durchführen des dritten Schritts (Einschrauben der Schraube in das Ersatzgewinde im Trägerelement) entfernt wird. Dieses Entfernen der Schraube ist möglich, sobald die Kleberschicht das Trägerelement nach einer entsprechenden Aushärtezeit in dem Stromschienengehäuseabschnitt fixiert bzw. hält. In der Praxis genügen, je nach Art des verwendeten Klebers, bereits einige Minuten, so dass der eigentliche Reparaturprozess dadurch nicht verlängert wird.

Ein weiteres, vorteilhaftes Verfahren sieht vor, dass beim Vorhandensein mehrerer Schrauben im Bereich einer Längsseite des Stromschienengehäuseabschnitts alle Gewinde in dem Stromschienengehäuseabschnitt im Durchmesser vergrößert werden, und dass das Trägerelement für jedes Gewinde ein Ersatzgewinde aufweist. Dadurch genügt es, stets ein einziges, standardisiertes Trägerelement zu verwenden, bei dem vorab entsprechend des (bekannten und standardisierten) Lochbildes für die Gewinde in dem Stromschienengewindeabschnitten entsprechende Ersatzgewinde ausgebildet sind. Dadurch ist es insbesondere nicht erforderlich, vor Ort, d.h. im Bereich der Windkraftanlage, das Trägerelement mit entsprechenden Ersatzgewinden auszubilden, wodurch das Handling zusätzlich vereinfacht wird. Nicht beansprucht ist ein Stromschienengehäuse mit wenigstens einem Stromschienengehäuseabschnitt, bei der dieser nach einem erfindungsgemäßen Verfahren repariert wurde und ein Trägerelement aufweist, das mit einem Stromschienengehäuseabschnitt verbunden ist. Ein derartiges Stromschienengehäuse hat den Vorteil, dass dieses auch nachträglich ggf. an einer anderen Stelle der Windkraftanlage verwendet werden kann, da dieses in Bezug auf seine Funktionalität einem neuen Stromschienengehäuseabschnitt entspricht.

Zum Durchführen des erfindungsgemäßen Verfahrens ist weiterhin ein nicht beanspruchtes Reparaturset vorgesehen, das zumindest ein vorzugsweise streifenförmiges Trägerelement mit wenigstens einem Ersatzgewinde sowie Hilfsmitteln zum Befestigen des Trägerelements an einer Wand des Stromschienengehäuseabschnitts umfasst.

Weitere Merkmale, Vorteile und Einzelheiten der Erfindung ergeben sich aus der nachfolgenden Beschreibung bevorzugter Ausführungsbeispiele sowie anhand der Zeichnung.

Diese zeigt in:
- Fig. 1: einen stark vereinfachten Längsschnitt durch eine Windkraftanlage,
- Fig. 2: den Verbindungsbereich zwischen zwei Stromschienengehäuseabschnitten im Querschnitt,
- Fig. 3: eine Ansicht in Richtung des Pfeils III der Fig. 2,
- Fig. 4: ein Detail der Fig. 2 in vergrößerter Darstellung,
- Fig. 5: ein Ablaufdiagramm zur Verdeutlichung des erfindungsgemäßen Reparaturverfahrens und
- Fig. 6: ein Trägerelement als Bestandteil eines Reparatursets in Einzeldarstellung.

Gleiche Elemente bzw. Elemente mit gleicher Funktion sind in den Figuren mit den gleichen Bezugsziffern versehen.

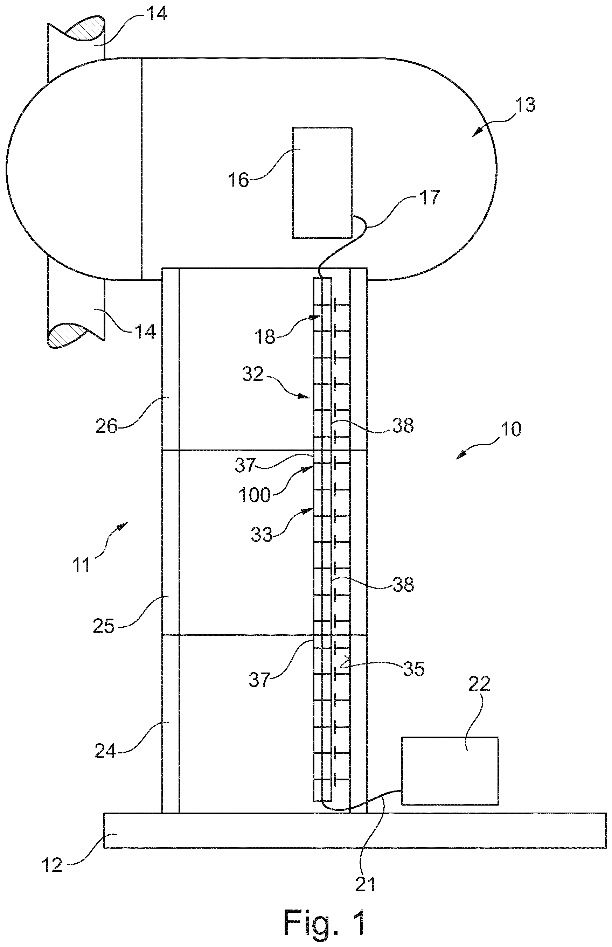

In der Fig. 1 ist der grundsätzliche Aufbau einer Windkraftanlage 10 stark vereinfacht dargestellt. Die Windkraftanlage 10 weist einen Turm 11 auf, der auf einem Sockel 12 angeordnet ist. An der Spitze des Turms 11 ist eine Gondel 13 angeordnet, in der u.a. die Rotorblätter 14 drehbeweglich gelagert sind. Innerhalb der Gondel 13 befindet sich ein Generator 16. Der Generator 16 ist mit einer oberen Verbindungsleitung 17 und einem oberen Anschluss mit einem lediglich angedeuteten Stromschienenverbund 18 gekoppelt. Der Stromschienenverbund 18 verläuft über die gesamte Länge bzw. Höhe des Turms 11. Im Bereich des Sockels 12 des Turms 11 ist der Stromschienenverbund 18 mittels einer weiteren, unteren Verbindungsleitung 21 bzw. einer unteren Verbindung mit einer Netzstation 22 verbunden.

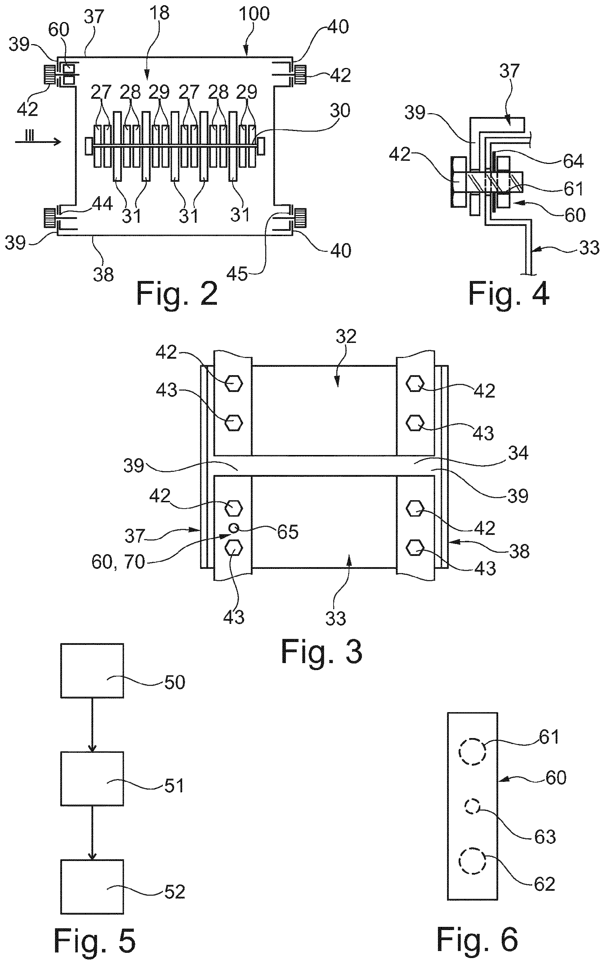

Der Turm 11 besteht beispielhaft aus drei übereinander angeordneten, jeweils hülsenartigen Turmsegmenten 24 bis 26. Ein derartiges Turmsegment 24 bis 26 weist eine typische Länge von etwa 20m auf, so dass die Gesamthöhe des Turms 11 (ohne die Gondel 13) etwa 60m beträgt. Innerhalb jedes Turmsegments 24 bis 26 verlaufen eine Vielzahl von Stromschienen 27 bis 29 als Bestandteil des Stromschienenverbunds 18, insbesondere in Form von länglich ausgebildeten Aluminiumstromschienen. Jede der Stromschienen 27 bis 29 bildet eine Phase einer Drehstromleitung aus, wobei beispielhaft entsprechend der Fig. 2 jeweils sechs Stromschienen 27 bis 29 (d.h. zwei mal drei Phasen) vorgesehen sind. Innerhalb jedes Turmsegments 24 bis 26 können dabei (in Längsrichtung des Turmsegments 24 bis 26 betrachtet), jeweils mehrere Stromschienen 27 bis 29 vorgesehen sein. Wesentlich ist, dass in dem in der Fig. 2 dargestellten Verbindungsbereich zwischen zwei Turmsegmenten 24, 25 bzw. 25, 26 die dem jeweiligen Turmsegment 24 bis 26 zugeordneten bzw. innerhalb diesem befindlichen Stromschienen 27 bis 29 in Längsrichtung miteinander verbunden sind, so dass der elektrisch durchgängige Stromschienenverbund 18 ausgebildet ist, der mit den beiden Verbindungsleitungen 17, 21 gekoppelt ist.

Die Verbindung zwischen den einzelnen Stromschienen 27 bis 29 erfolgt beispielsweise mittels eines in der Fig. 2 dargestellten Klemmverbinders 30, der in den Stromschienen 27 bis 29 ausgebildete Öffnungen bzw. Schlitze eingreift, und der die Stromschienen 27, 28 gegeneinander verpresst, um eine elektrische Verbindung zwischen den Stromscheinen 27 bis 29 der Turmsegmente 24 bis 26 herzustellen. Insbesondere ist es darüber hinaus erforderlich, zwischen den einzelnen Stromschienen 27 bis 29 noch aus Keramik bestehende Isolationselemente bzw. Isolationsplatten 31 anzuordnen, die die einzelnen, jeweils eine Phase ausbildende Stromschienen 27 bis 29 elektrisch voneinander isoliert.

Der Stromschienenverbund 18 ist innerhalb eines Stromschienengehäuses 100 angeordnet, das typischerweise über die gesamte Länge des Stromschienenverbunds 18 bzw. der Turmsegmente 24 bis 26 verläuft. Das einen im Wesentlichen rechteckigen Querschnitt aufweisende Stromschienengehäuse 100 besteht wiederum aus einer Vielzahl von in Längsrichtung miteinander verbundenen Stromschienengehäuseabschnitten 32, 33. Hierbei wird in der Darstellung der Fig. 1 davon ausgegangen, dass die in den Turmsegmenten 24 bis 26 jeweils oberen Stromschienengehäuseabschnitte 32 mit den jeweils in den Turmsegmenten 25, 26 unteren Stromschienengehäuseabschnitten 33 verbunden sind. Selbstverständlich ist es möglich bzw. vorgesehen, dass innerhalb jedes Turmsegments 24 bis 26 das Stromschienengehäuse 100 eine Vielzahl von miteinander verbundenen Stromschienengehäuseabschnitten 32, 33 aufweist, die jeweils typischerweise eine Länge von beispielsweise 2m haben.

Das Stromschienengehäuse 100 dient dazu, die innerhalb des Stromschienengehäuses 100 angeordneten Stromschienen 27 bis 29 bzw. den Stromschienenverbund 18 gegen Manipulationen bzw. Berührungen zu schützen. Insbesondere muss es sichergestellt sein, dass es zwischen den einzelnen Stromschienen 27 bis 29 zu keinem elektrischen Kurzschlüssen kommt.

Um Bewegungen des Turms 11 der Windkraftanlage 10 bzw. der einzelnen Turmsegmente 24 bis 26 ausgleichen zu können, sind die Stromschienengehäuseabschnitte 32, 33 zwischen den Turmsegmenten 24, 25 bzw. 25, 26 mit einem geringen Axialspalt 34 von beispielsweise 10mm angeordnet. Auf der der inneren Turmwand 35 zugewandten, sowie auf der der inneren Turmwand 35 abgewandten Seite sind die Turmschienengehäuseabschnitte 32, 33 mit jeweils einem vorderen bzw. hinteren Verbindungselement 37, 38 miteinander verbunden. Insbesondere überdecken die Verbindungselemente 37, 38 den Verbindungsbereich zwischen den Stromschienen 27 bis 29 der einzelnen Turmsegmente 24 bis 26.

Die Verbindungselemente 37, 38 sind beispielhaft jeweils als Abdeckplatten bzw. Abdeckbleche mit senkrecht umgekanteten Längsstreifen 39, 40 ausgebildet. Die in Längsrichtung mittig zum Axialspalt 34 angeordneten Verbindungselemente 37, 38 sind seitlich an den Stromschienengehäuseabschnitten 32, 33 über an den Längsstreifen 39, 40 ausgebildeter Durchgangsbohrungen mit jeweils zwei Schrauben 42, 43 mit dem entsprechenden Stromschienengehäuseabschnitt 32, 33 verbunden, wobei die Anordnung der Schrauben 42, 43 in Längsrichtung des Stromschienengehäuses 100 erfolgt. Es kommen daher für jedes der Verbindungselemente 37, 38 jeweils acht Schrauben 42, 43 zur Anwendung.

Zum Ausbilden der Schraubverbindungen weisen die Stromschienengehäuseabschnitte 32, 33 in einem einen U-förmigen Querschnitt aufweisenden Abschnitt des Stromschienengehäuseabschnitts 32, 33 jeweils eine Gewindebohrung 44, 45 auf. Die Gewindebohrung 44, 45 ist beispielsweise typischerweise als M6-Gewinde ausgebildet. Zur Montage oder aber nach einer entsprechenden Wartung oder Reparatur der Stromschienengehäuseabschnitte 32, 33 ist es erforderlich, die zuvor entfernten Verbindungselemente 37, 38 wieder an den Stromschienengehäuseabschnitten 32, 33 zu montieren. Aufgrund von fehlerhafter Montage, Bauteiltoleranzen oder ähnlichem kann es dabei vorkommen, dass bei der Montage eines Verbindungselements 37, 38 beim Einschrauben einer Schraube 42, 43 diese im Bereich der Gewindebohrung 44, 45 reißt, oder aber, dass bei der Montage der Schraube 42, 43 die zugeordnete Gewindebohrung 44, 45 beschädigt wird, so dass diese nicht mehr zur Montage der Schraube 42, 43 verwendet werden kann. Um trotzdem den vorhandenen Stromschienengehäuseabschnitt 32, 33 weiterhin verwenden zu können, ist es erfindungsgemäß vorgesehen, den die defekte Gewindebohrung 44, 45 aufweisenden Stromschienengehäuseabschnitt 32, 33 des Stromschienengehäuses 100 zu reparieren.

Die erfindungsgemäße Reparatur sieht entsprechend der Fig. 5 zumindest folgende Schritte vor: Zunächst wird in einem ersten Schritt 50 sowohl die betroffene defekte Gewindebohrung 44, 45, als auch die andere (unbeschädigte) Gewindebohrung 45, 44 im betreffenden Bereich des Stromschienengehäuseabschnitts 32, 33 im Durchmesser vergrößert bzw. aufgebohrt. Wenn die (ursprüngliche) Gewindebohrung 44, 45 beispielsweise als M6-Gewinde ausgebildet ist, so werden die Gewindebohrungen 44, 45 beispielsweise auf einen Durchmesser von 8mm vergrößert bzw. erweitert. Anschließend wird in einem zweiten Schritt 51 ein Trägerelement 60 in den Bereich der Gewindebohrung 44, 45 gebracht.

Das in der Fig. 6 in Einzeldarstellung gezeigte Trägerelement 60 ist vorzugsweise Bestandteil eines Reparatursets 70 und besteht beispielsweise aus einem nichtrostenden Material, insbesondere aus Edelstahl, und ist streifenförmig, mit einer Dicke von beispielsweise 4mm, ausgebildet. Die streifenförmige Ausbildung des Trägerelements 60 ergibt sich aus der im Bereich der Gewindebohrung 44, 45 U-förmigen Ausbildung des Stromschienengehäuses 100. Das Trägerelement 60 weist vorzugsweise, jedoch nicht einschränkend, eine derartige Länge auf, dass innerhalb des Trägerelements 60 zwei Ersatzgewindebohrungen 61, 62 ausgebildet sind, deren Lochbild bzw. Abstand dem Lochbild bzw. Abstand der (ursprünglichen) Gewindebohrungen 44, 45 entspricht. Die Ersatzgewindebohrungen 61, 62 weisen dabei dieselbe Größe auf wie die originalen Gewindebohrungen 44, 45, im beschriebenen Ausführungsbeispiel sind diese daher als M6-Gewindebohrung 61, 62 ausgebildet. Ferner ist beispielhaft in dem Bereich zwischen den beiden Ersatzgewindebohrungen 61, 62 eine weitere Gewindebohrung 63 ausgebildet, beispielsweise in Form eines M4-Gewindes. Die Befestigung des Trägerelements 60 an dem Stromschienengehäuse 100 im Bereich der beschädigten Gewindebohrung 44, 45 erfolgt dadurch, dass (vorzugsweise mittels einer Schablone) entsprechend des Lochbildes der Ersatzgewindebohrungen 61, 62 und der weiteren Gewindebohrung 63 an dem Trägerelement 60 an dem Stromschienengehäuseabschnitt 32, 33 des Stromschienengehäuses 100 eine zusätzliche Bohrung ausgebildet wird, die der weiteren Gewindebohrung 63 zugeordnet ist, und die einen etwas größeren Durchmesser aufweist als der Außendurchmesser der für die weitere Gewindebohrung 63 verwendeten Schraube, um das Trägerelement 60 besser positionieren bzw. zentrieren zu können.

Weiterhin ist es vorgesehen, dass auf den einander zugewandten Flächen des Stromschienengehäuses 100 bzw. des zu reparierenden Stromschienengehäuseabschnitts 32, 33 und dem Trägerelement 60 (d.h. auf der dem Verbindungselement 37, 38 abgewandten Seite des Stromschienengehäuseabschnitts 32, 33) eine Kleberschicht 64 aufgebracht wird, die ebenfalls Bestandteil des angesprochenen Reparatursets 70 ist. Der zweite Schritt 51 (Befestigen des Trägerelements 60 an dem zu reparierenden Turmschienengehäuseabschnitt 32, 33) sieht vor, dass zunächst die entsprechende Kleberschicht 64 auf das Trägerelement 60 aufgebracht wird, und anschließend mittels einer weiteren Schraube 65 (ebenfalls Bestandteil des Reparatursets 70) das Trägerelement 60 so innerhalb des zu reparierenden Stromschienengehäuseabschnitts 32, 33 positioniert wird, dass die Ersatzgewindebohrungen 61, 62 mit den ursprünglichen Gewindebohrungen 44, 45 bzw. den im Durchmesser vergrößerten Bereichen fluchten. Um zu verhindern, dass während der Trocknungsphase die Kleberschicht 64 zu einer Bewegung des Trägerelements 60 führt, wird das Trägerelement 60 mittels der weiteren Schraube 65 zeitweise an dem entsprechenden Stromschienengehäuseabschnitt 32, 33 befestigt bzw. fixiert. Sobald die Trocknungsphase der Kleberschicht 64 abgeschlossen ist, was beispielsweise typischerweise nur etwa 10min. bis 15min. dauert, kann die weitere Schraube 65 entfernt werden. Anschließend erfolgt in einem dritten Schritt 52 die Montage des Verbindungselements 37, 38 durch Befestigen der Schrauben 42, 43 in den Ersatzgewindebohrungen 61, 62 des Trägerelements 60. Somit ist die Reparatur des Stromschienengehäuses 100 abgeschlossen.

Ergänzend wird erwähnt, dass bisher nur die allernötigsten Schritte 50 bis 52 des erfindungsgemäßen Reparaturverfahrens beschrieben wurden. Während des Reparaturverfahrens bzw. vorab kann es darüber hinaus vorgesehen sein, weitere Verfahrensschritte vorzusehen, die der Wartung bzw. der Sicherstellung einer einwandfreien Reparatur dienen. So kann es beispielhaft vorgesehen sein, dass während der Reparatur grundsätzlich die Verbindungsschraube bzw. den Klemmverbinder 30 zwischen den Stromschienen 27 bis 29 ausgetauscht wird. Weiterhin werden, insbesondere nach dem Aufbohren bzw. Aufweiten der ursprünglichen Gewindebohrung 44, 45, die entsprechenden Bereiche ausgesaugt, um ggf. vorhandene Metallspäne aus dem Stromschienengehäuse 100 zu entfernen. Darüber hinaus kann es vorgesehen sein, dass die Schrauben 42, 43 nach erfolgter Montage mit einem Schraubensicherungslack versehen werden, um diese zu sichern.

Das soweit beschriebene Verfahren kann in vielfältiger Art und Weise abgewandelt bzw. modifiziert werden, ohne vom Erfindungsgedanken abzuweichen. So kann es beispielsweise vorgesehen sein, dass die entsprechenden Stromschienengehäuseabschnitte 32, 33 zur Reparatur von dem Turm 11 der Windkraftanlage 10 abmontiert werden, um einen besseren Zugang zu den Stromschienengehäuseabschnitten 32, 33 zu ermöglichen. Darüber hinaus ist es denkbar, in Abänderung des dargestellten Ausführungsbeispiels ein Trägerelement 60 zu verwenden, das lediglich eine einzige Ersatzgewindebohrung 61, 62 aufweist, die an dem Ort angeordnet ist, an dem die beschädigte Gewindebohrung 44, 45 ist. In diesem Fall sind jedoch typischerweise unterschiedlich ausgebildete Trägerelemente 60 erforderlich. Ein derartiges Verfahren bzw. derartige modifizierte Trägerelemente 60 haben jedoch den Vorteil, dass ein Aufbohren bzw. Erweitern der ursprünglich unbeschädigten Gewindebohrung 44, 45 nicht erforderlich ist. Darüber hinaus ist es denkbar, das Trägerelement 60 in der Zeit des Aushärtens der Klebeschicht 64 nicht mittels der weiteren Schraube 65 zu fixieren, sondern mittels sonstiger, geeigneter Spannelemente, beispielsweise Schraubzwingen, Spannspratzen oder ähnlichem.

### Bezugszeichen

- 10: Windkraftanlage
- 11: Turm
- 12: Sockel
- 13: Gondel
- 14: Rotorblatt
- 16: Generator
- 17: Verbindungsleitung
- 18: Stromschienenverbund

- 21: Verbindungsleitung
- 22: Netzstation
- 24 bis 26: Turmsegment
- 27 bis 29: Stromschiene

- 30: Klemmverbinder
- 31: Isolationsplatte
- 32, 33: Stromschienengehäuseabschnitte
- 34: Axialspalt
- 35: Turmwand
- 37, 38: Verbindungselement
- 39, 40: Längsstreifen
- 42, 43: Schraube
- 44, 45: Gewindebohrung

- 50: 1. Schritt
- 51: 2. Schritt
- 52: 3. Schritt

- 60: Trägerelement
- 61, 62: Ersatzgewindebohrung
- 63: Gewindebohrung
- 64: Kleberschicht
- 65: Schraube
- 70: Reparaturset

- 100: Stromschienengehäuse

## Patentansprüche

1. Verfahren zum Reparieren eines Stromschienengehäuses (100) einer Windkraftanlage (10), bei dem das Stromschienengehäuse (100) aus mehreren, vorzugsweise jeweils einen zumindest im Wesentlichen rechteckförmigen Querschnitt aufweisenden Stromschienengehäuseabschnitten (32, 33) besteht, die in Längsrichtung miteinander verbunden sind, wobei die Verbindung der Stromschienengehäuseabschnitte (32, 33) durch vorzugsweise plattenförmige Verbindungselemente (37, 38) erfolgt, die einen Verbindungsbereich von Stromschienen (27 bis 29) innerhalb des Stromschienengehäuses (100) abdecken, wobei die Verbindungselemente (37, 38) mittels Schrauben (42, 43) mit den beiden in Längsrichtung aneinander anschließenden Stromschienengehäuseabschnitten (32, 33) verbunden sind, wobei die Stromschienengehäuseabschnitte (32, 33) Gewinde (44, 45) aufweisen, die zur Verankerung der Verbindungselemente (37, 38) mittels der Schrauben (42, 43) dienen, wobei beim Vorhandensein eines beschädigten oder in sonstiger Weise nicht verwendbaren Gewindes (44, 45) an einem Stromschienengehäuseabschnitt (32, 33) in einem ersten Schritt der Bereich des Gewindes (44, 45) im Durchmesser vergrößert wird, wobei in einem zweiten Schritt in Überdeckung mit dem ursprünglichen Gewinde (44, 45) ein ein Ersatzgewinde (61, 62) für die Schraube (42, 43) aufweisendes Trägerelement (60) mit dem Stromschienengehäuseabschnitt (32, 33) verbunden wird, und wobei in einem dritten Schritt zur Montage des Verbindungselements (37, 38) die Schraube (42, 43) durch den im Durchmesser vergrößerten Bereich des Stromschienengehäuseabschnitts (32, 33) hindurchgeführt und in das Ersatzgewinde (61, 62) eingeschraubt wird, wobei das Trägerelement (60) mittels einer Kleberschicht (64) mit dem Stromschienengehäuseabschnitt (32, 33) verbunden wird, wobei das Trägerelement (60) mit einer zusätzlichen Schraube (65) mit dem Stromschienengehäuseabschnitt (32, 33) verbunden wird, und wobei in der Wand des Stromschienengehäuseabschnitts (32, 33) ein zusätzliches Durchgangsloch und in dem Trägerelement (60) ein zusätzliches Gewinde (63) ausgebildet wird.

2. Verfahren nach Anspruch 1,
**dadurch gekennzeichnet,**
**dass** die zusätzliche Schraube (65) vor Durchführen des dritten Schritts entfernt wird.

3. Verfahren nach Anspruch 1 oder 2,
**dadurch gekennzeichnet,**
**dass** beim Vorhandensein mehrerer Schrauben (42, 43) im Bereich einer Längsseite des Stromschienengehäuseabschnitts (32, 33) alle Gewinde (44, 45) in dem Stromschienengehäuseabschnitt (32, 33) im Durchmesser vergrößert werden, und dass das Trägerelement (60) für jedes Gewinde (44, 45) ein Ersatzgewinde (61, 62) aufweist.

## Claims

1. A method for repairing a power rail housing (100) of a wind power plant (10), in which the power rail housing (100) consists of multiple power rail housing portions (32, 33) which preferably each have a substantially rectangular cross-section, at least in the cross-section, and which are connected to one another in the longitudinal direction, wherein the connection of the power rail housing portions (32, 33) is effected by preferably plate-shaped connection elements (37, 38), which cover a connection area of power rails (27 to 29) inside the power rail housing (100), wherein the connection elements (37, 38) are connected by screws (42, 43) to the two power rail housing portions (32, 33) located one after the other in the longitudinal direction,
wherein
the power rail housing portions (32, 33) comprise threads (44, 45), which serve to anchor the connection elements (37, 38) by means of the screws (42, 43), wherein in the case there is a damaged thread (44, 45) or a thread that can not be used otherwise on a power rail housing portion (32, 33), in a first step, the region of the thread (44, 45) is enlarged in diameter, wherein in a second thread, in coverage with the original thread (44, 45), a carrier element (60) comprising a replacement thread (61, 62) for the screw (42, 43) is connected with the power rail housing portion (32, 33) and wherein in a third step for mounting the connection element (37, 38), the screw is screwed into the replacement thread (61, 62) through the region of the power rail housing portion (32, 33) enlarged in diameter, wherein the carrier element (60) is connected to the power rail housing portion (32, 33) by means of an adhesive layer (64), wherein the carrier element (60) is connected with the power rail housing portion (32, 33) with an additional screw (65), and wherein an additional through-hole in formed in the wall of the power rail housing portion (32, 33) and an additional thread (63) is formed in the carrier element (60).

2. The method according to claim 1,
**characterized in that**
the additional screw (65) is removed before performing the third step.

3. The method according to claim 1 or 2,
**characterized in that**
if multiple screws (42, 43) are present, all threads (44, 45) in the power rail housing portion (32, 33) are enlarged in diameter in the region of a longitudinal side of the power rail housing portion (32, 33), and **in that** the carrier element (60) comprises one replacement thread (61, 62) for each thread (44, 45).

## Revendications

1. Procédé de réparation d'un caisson de barres collectrices (100) d'une éolienne (10), dans lequel le caisson de barres collectrices (100) se compose de plusieurs segments de caisson de barres collectrices (32, 33), présentant de préférence respectivement une section transversale au moins sensiblement rectangulaire, qui sont assemblés les uns aux autres dans le sens longitudinal, dans lequel l'assemblage de segments de caisson de barres collectrices (32, 33) est de préférence effectué au moyen d'éléments de liaison (37, 38) en forme de plaques qui recouvrent une zone d'assemblage de barres collectrices (27 à 29) à l'intérieur du caisson de barres collectrices (100), dans lequel les éléments de liaison (37, 38) sont fixés au moyen de vis (42, 43) aux deux segments de caisson de barres collectrices (32, 33) adjacents dans le sens longitudinal,
dans lequel les segments de caisson de barres collectrices (32, 33) présentent des filetages (44, 45) qui sont utilisés pour l'ancrage des éléments de liaison (37, 38) au moyen des vis (42, 43), dans lequel, lors de la présence d'un filetage (44, 45) endommagé ou par ailleurs non utilisable sur un segment de caisson de barres collectrices (32, 33), lors d'une première étape, ladite zone du filetage (44, 45) est soumise à une augmentation de diamètre, dans lequel, lors d'une deuxième étape, un élément de support (60) présentant un filetage de substitution (61, 62) pour les vis (42, 43) recouvrant les filetages originaux (44, 45) est relié au segment de caisson de barres collectrices (32, 33), et dans lequel, lors d'une troisième étape destinée au montage de l'élément de liaison (37, 38), les vis (42, 43) sont insérées à travers la zone du segment de caisson de barres collectrices (32, 33) dont le diamètre a été augmenté et sont vissées dans le filetage de substitution (61, 62), dans lequel l'élément de support (60) est relié au moyen d'une couche adhésive (64) au segment de caisson de barres collectrices (32, 33), dans lequel l'élément de support (60) est relié au moyen d'une vis supplémentaire (65) au segment de caisson de barres collectrices (32, 33), et dans lequel un orifice traversant supplémentaire est formé dans la paroi du segment de caisson de barres collectrices (32, 33) et un filetage supplémentaire (63) est formé dans l'élément de support (60).

2. Procédé selon la revendication 1,
**caractérisé en ce que** la vis supplémentaire (65) est retirée avant l'exécution de la troisième étape.

3. Procédé selon la revendication 1 ou 2,
**caractérisé en ce que**, lors de la présence de plusieurs vis (42, 43) dans la zone d'un côté longitudinal du segment de caisson de barres collectrices (32, 33), tous les filetages (44, 45) sont soumis à une augmentation de diamètre dans le segment de caisson de barres collectrices (32, 33) et **en ce que** l'élément de support (60) présente un filetage de substitution (61, 62) pour chaque filetage (44, 45).
